# EUROPÄISCHE PATENTANMELDUNG

(11) **EP 4 199 419 A1**
(43) Veröffentlichungstag der Anmeldung: **21.06.2023**
(21) Anmeldenummer: 21215120.3
(22) Anmeldetag: 16.12.2021
(51) Int. Cl.: H04L 9/40, H04L 9/08, H04M 7/00

(54) **SICHERUNG VON UND ZU TEILNEHMERSEITIGEM VERBINDUNGSENDPUNKT ÜBER ÖFFENTLICHES NETZ ÜBERTRAGENER DATEN**

(71) Anmelder: Deutsche Telekom AG, 53113 Bonn (DE)
(72) Erfinder: BRAUN, Ralf-Peter, 12305 Berlin (DE); GEITZ, Marc, 58089 Hagen (DE)
(74) Vertreter: Nern, Peter-Michael

(57) **Zusammenfassung**

Die Erfindung bezieht sich auf die, über ein öffentliches Weitverkehrsnetz erfolgende gesicherte Übertragung von Daten zwischen einem Integrated Access Device IAD als einem teilnehmerseitigen Verbindungsendpunkt und einer Gegenstelle, wobei das IAD als Zugangseinrichtung über einen als Peering Point ausgebildeten Netzwerkknoten an ein Zugangsnetz und über dieses an das Weitverkehrsnetz angekoppelt ist. Auf der letzten Meile wird zwischen dem IAD und dem Peering Point ein VPN-Tunnel aufgebaut, der mittels eines einen quantensicheren Schlüssel verwendenden Protokolls gesichert wird. Gemäß der vorgeschlagenen Lösung wird der dazu verwendete quantensichere Schlüssel als gemeinsamer Schlüssel von IAD und Peering Point gebildet, indem eine durch eine Entropiequelle erzeugte und an beide Einrichtungen übertragene Zufallszahl in dem Peering Point und in dem IAD in jeweils identischer Weise mit einem ebenfalls durch eine Zahl repräsentierten Pre-shared Secret, nämlich mit einem beim IAD und beim Peering Point hinterlegten gemeinsamen Geheimnis, verrechnet wird.

## Beschreibung

Die Erfindung betrifft eine technische Lösung zur Sicherung von und zu einem teilnehmerseitigen Verbindungsendpunkt über ein öffentliches Weitverkehrsnetz übertragener Daten. Sie bezieht sich insoweit insbesondere auf eine sichere Datenübertragung auf der sogenannten letzten Meile, deren teilnehmerseitiger Verbindungsendpunkt ein Integrated Access Device IAD ist, also eine Zugangseinrichtung, respektive ein Zugangsgerät, über welches ein oder mehrere telekommunikative Endgeräte eines Teilnehmers Zugang zu einem Weitverkehrsnetz, das heißt einem NGN (Next Generation Network), wie zum Beispiel dem Internet erhalten. Gegenstände der Erfindung sind hierbei ein entsprechendes Verfahren und ein zur Durchführung dieses Verfahrens ausgebildetes System.

Der Absicherung der Infrastruktur öffentlicher Netze und der über diese ausgetauschten Daten gegen potenzielle Angriffe und Manipulationen kommt eine auch weiterhin stark steigende Bedeutung zu. Ein wesentlicher Teil dieser Absicherung geschieht durch die Verschlüsselung der als Teil der Infrastruktur von Netzwerken anzusehenden, die Kommunikation und die Datenverkehre managenden Steuerdaten und der über die Netzwerke übertragenen Nutzdaten der Kommunikationsteilnehmer. Für die Verschlüsselung entsprechender Daten ist eine Vielzahl von Verschlüsselungsmechanismen bekannt geworden, welche sich im Wesentlichen in die Kategorien asymmetrische Verschlüsselung und symmetrische Verschlüsselung unterteilen lassen.

Bei der asymmetrischen Verschlüsselung wird für die Verschlüsselung der Daten ein allen dazu berechtigten Kommunikationsteilnehmern bekannter öffentlicher Schlüssel verwendet, wohingegen zur späteren Entschlüsselung der solchermaßen verschlüsselten Daten ein privater Schlüssel eines die mit seinem öffentlichen Schlüssel verschlüsselten Daten empfangenden Teilnehmers, respektive einer Einrichtung, verwendet wird, welcher dort zuvor als Teil eines den öffentlichen und den privaten Schlüssel umfassenden Schlüsselpaares erzeugt wurde.

Deutlich sicherer als die asymmetrische Verschlüsselung sind symmetrische Verschlüsselungsverfahren, bei denen für die Verschlüsselung der Daten und für deren spätere Entschlüsselung jeweils derselbe geheime Schlüssel verwendet wird. Ein Problem der symmetrischen Verschlüsselung ist es jedoch, den vorgenannten geheimen Schlüssel an die zu seiner Benutzung berechtigten Einheiten und/oder Teilnehmer zu verteilen, ohne dass hierbei der geheime Schlüssel in die Hände unbefugter, respektive potenzieller Angreifer gelangt.

Neue Möglichkeiten für die Verteilung zur symmetrischen Verschlüsselung verwendbarer geheimer Schlüssel bietet insoweit die Quantenkryptografie. Diese macht es möglich, Schlüssel mit sehr hoher Entropie, das heißt tatsächlich zufälliger Art, zu generieren und diese angriffssicher an mehrere Teilnehmer und/oder Einrichtungen zu verteilen. Hierbei ermöglichen es Verfahren der Quantum Key Distribution (QKD) entsprechende Schlüssel hoher Entropie an zumindest zwei voneinander entfernten Orten gewissermaßen gleichzeitig bereitzustellen, und zwar in der Weise, dass jeder Versuch eines Angriffs auf derartige Schlüssel unmittelbar erkannt wird, also nicht verdeckt bleiben kann. Hierfür bedarf es jedoch eines Quantenkanals, das heißt eines Kanals zur Übertragung quantenmechanischer Zustände, zwischen den beteiligten Teilnehmern, respektive deren die Schlüssel verwendenden Einrichtungen.

Allerdings resultieren aus den für die Anwendung des QKD-Prinzips bestehenden Erfordernissen auch Nachteile für diese Technologie. So ist die Reichweite der erforderlichen Quantenkanäle, jedenfalls soweit diese physisch durch typischerweise dafür in den Netzwerken verwendete Glasfasern realisiert werden, sehr begrenzt. Die mögliche Reichweite beträgt hierbei typischerweise zirka 100 km, allenfalls wenige 100 km, jedoch nach derzeitigem Stand nicht 1000 km oder mehr. Dies resultiert aus der Dämpfung, welcher die über die Quantenkanäle (Lichtleitfasern) übertragenen quantenmechanischen Zustände unterworfen sind. Auf der anderen Seite ist Prinzip bedingt ein Einsatz von Verstärkern innerhalb der Quantenkanäle nicht möglich, da die Verstärkung entsprechender quantenmechanische Zustände transportierender Signale deren Auslesen erforderlich macht, was unmittelbar zu einer Zerstörung dieser quantenmechanischen Zustände führen würde. Ein weiterer wesentlicher Nachteil besteht darin, dass Systeme und Einrichtungen für den Einsatz der QKD-Technologie sehr teuer sind.

Es sind daher spezielle Lösungen erforderlich, um auch Netzelementen, welche beispielsweise aufgrund der Entfernung direkt nicht über einen Quantenkanal mit anderen Netzelementen verbunden sind oder aus Kostengründen selbst nicht mit Einrichtungen zur Erzeugung von Quantenschlüsseln ausgestattet werden können, quantensichere Schlüssel, das heißt Schlüssel hoher Entropie, zur Verfügung stellen. Eine Möglichkeit besteht dabei darin, die Schlüssel mit Hilfe einer über quantenmechanische Mittel verfügenden Einrichtung, wie beispielsweise eines Quantum Random Number Generator (QRNG), zu erzeugen und diese Schlüssel unter Einsatz ebenfalls als sehr sicher anzusehender Verschlüsselungsverfahren an die sie für den späteren Einsatz benötigenden Netzelemente zu übermitteln.

Jedoch besteht hierbei das Risiko, dass ein entsprechender quantensicherer Schlüssel bei seiner über ein Netzwerk erfolgenden Übermittlung an ein für seinen Empfang bestimmtes Netzelement abgefangen werden könnte. Die Folge wäre, dass eine später unter Verwendung dieses Schlüssels erfolgende verschlüsselte Kommunikation, wie beispielsweise der verschlüsselte Austausch die Netzinfrastruktur betreffender Steuerdaten, auch nicht mehr sicher ist, wobei dies möglicherweise zudem durch die berechtigten Teilnehmer zunächst längere Zeit gar nicht bemerkt wird.

Aus den vorgenannten Gründen, nämlich insbesondere wegen der hohen Kosten, ist davon auszugehen, dass die Nutzung von QKD-Verfahren und der dafür erforderlichen Technik im Wesentlichen auf die Infrastruktur der Kernnetze und allenfalls noch auf die Zugangsnetze der Provider beschränkt bleiben wird. Demnach wird insbesondere der Bereich der sogenannten letzten Meile, also der Abschnitt zwischen teilnehmerseitigen Zugangseinrichtungen (IAD) und den diese an ein jeweiliges Zugangsnetz und damit an ein Weitverkehrsnetz, wie insbesondere das Internet, ankoppelnden Peering Points nicht unmittelbar von der QKD-Technik profitieren.

Dies gilt jedenfalls insoweit, als nicht davon auszugehen ist, dass insbesondere für den breiten Massenmarkt vorgesehene teilnehmerseitige Kommunikationseinrichtungen wie Home-Gateways oder Router mittelfristig durch den Einsatz entsprechend teurer Hardware für einen Austausch quantensicherer Schlüssel nach einem QKD-Verfahren ertüchtigt werden. Dennoch haben selbstverständlich viele Teilnehmer das Bedürfnis, dass ihre Daten auch auf der letzten Meile sicher, und dies meint abgesichert auch gegenüber eventuellen Angriffen mittels Quantencomputertechnik oder dergleichen, übertragen werden. Dies gilt beispielsweise im besonderen Maße im geschäftlichen Umfeld, in welchem Unternehmen sicher sein können müssen, dass Daten, die sie von einem Firmenstandort an einen anderen oder an andere Unternehmen übertragen, vor Angriffen geschützt werden, welche auf die Ausspähung der Daten oder ihre Manipulation gerichtet sind. Auch im Hinblick auf die Fernübertragung von Steuerdaten, so beispielsweise im Zusammenhang mit dem zunehmenden Ausbau des IoT (Internet of Things) besteht sicherlich ebenfalls ein sehr hohes Sicherheitsbedürfnis.

Aufgabe der Erfindung ist es, eine Lösung bereitzustellen, welche einen Schutz der Datenübertragung auf der letzten Meile, das heißt die Sicherung von und zu teilnehmerseitigen Verbindungsendpunkten über ein öffentliches Weitverkehrsnetz unter Einsatz quantensicherer Schlüssel, ermöglicht. Hierzu sind ein entsprechendes Verfahren anzugeben und ein zu dessen Durchführung geeignetes System bereitzustellen.

Die Aufgabe wird durch ein Verfahren mit den Merkmalen des Patentanspruchs 1 gelöst. Ein die Aufgabe lösendes, zur Durchführung des Verfahrens geeignetes System wird durch den ersten Sachanspruch charakterisiert. Vorteilhafte Aus- und Weiterbildungen sind durch die jeweiligen Unteransprüche gegeben.

Gemäß den vorstehenden Erläuterungen und der Aufgabe bezieht sich das erfindungsgemäße Verfahren auf ein Verfahren zur gesicherten Übertragung von Daten, welche zwischen einem Integrated Access Device (IAD) als einem teilnehmerseitigen Verbindungsendpunkt und einer Gegenstelle über ein öffentliches Weitverkehrsnetz übertragen werden. Hierbei ist das betreffende IAD (zum Beispiel ein Home Gateway oder ein Home- oder Office Router - im Weiteren auch Gateway Router) als Zugangseinrichtung über einen Peering Point an ein Zugangsnetz eines Zugangsnetzproviders und über dieses Zugangsnetz schließlich an das Weitverkehrsnetz angekoppelt. Unter anderem mit Blick auf die für das IAD synonym verwendeten Begriffe Gateway Router und Home Gateway, sei an dieser Stelle darauf hingewiesen, dass es sich im Kontext der nachfolgenden Ausführungen, soweit nicht ausdrücklich anders angegeben, bei einem solchen Gateway Router (verkürzend auch einfach "Router"), Home Gateway oder dergleichen (Home- oder Office Router) stets um eine teilnehmerseitige Einrichtung, also um eine Einrichtung beim Teilnehmer/Kunden, handelt, nicht jedoch um einen Router in Kern- oder Zugangsnetzen. Auch so genannte "Software Defined Gateways", welche beispielsweise in Form eines "Open Source Gateway" (Rechner, Server) Device mit einer darauf installierten Software realisiert sind, können hiervon umfasst sein.

Zur gesicherten Übertragung der Daten auf der letzten Meile wird gemäß dem hier vorgestellten Verfahren zwischen dem IAD und dem Peering Point, unter Nutzung einer bestehenden physischen Verbindung, wie einer DSL-Kupferleitung oder einer bis zum Anschlusspunkt des IAD hin geführten Glasfaserleitung (FTTH = Fibre to the Home), ein VPN-Tunnel aufgebaut. Dieser VPN-Tunnel wird mittels eines einen quantensicheren Schlüssel verwendenden Protokolls gesichert. Der zur Sicherung des VPN-Tunnels verwendete quantensichere Schlüssel wird hierbei als gemeinsamer Schlüssel von IAD und Peering Point gebildet. Dies geschieht, indem eine durch eine (zentrale) Entropiequelle erzeugte und an den Peering Point sowie an das IAD über den Peering Point übertragene Zufallszahl in dem Peering Point und in dem IAD in jeweils identischer Weise mit einem ebenfalls durch eine Zahl repräsentierten Pre-shared Secret, nämlich mit einem vorverteilten und sowohl bei dem IAD als auch bei dem Peering Point hinterlegten gemeinsamen Geheimnis, verrechnet wird. Die zur Lösung der Aufgabe vorgeschlagene Verfahren geht hierbei im Hinblick auf eine sichere Übertragung von Daten über ein Weitverkehrsnetz davon aus, dass das im Zusammenhang mit dieser Lösung genutzte Weitverkehrsnetz als Kernnetz und die Zugangsnetze zu diesem ohnehin hochgesichert, vorzugsweise QKD-gesichert sind. Das zuvor angesprochene Pre-shared Secret wird dabei vorzugsweise vorverteilt (Pre-shared), indem es von einem Netzbetreiber einerseits in dem Peering Points hinterlegt und andererseits beispielsweise in dem von ihm dem Kunden zur Nutzung seines Netzes zur Verfügung gestellten IAD vorprovisioniert wird.

Demgemäß müssen weder der Peering Point noch das IAD mit technischen Einrichtungen zur Nutzung quantenmechanischer Prinzipien, wie beispielsweise von QKD-Verfahren, ausgestattet sein, können aber dennoch zwischen sich eine quantensicher abgesicherte Tunnelverbindung aufbauen. Die vorgenannte Entropiequelle wird hierbei typischerweise durch einen Netzprovider betrieben werden und so angeordnet sowie eingerichtet sein, dass sie eine Mehrzahl von Peering Points des betreffenden Providers und über diese Peering Points an das Providerzugangsnetz angekoppelte IAD mit Zufallszahlen hoher Entropie versorgen kann. Bei der Entropiequelle kann es sich beispielsweise um einen Quantenzufallszahlengenerator, einen Quantencomputer oder um eine gemeinsam mit einer anderen dafür ausgebildeten Einrichtung quantensichere Schlüssel nach einem QKD-Verfahren erzeugende und austauschende Einrichtung handeln. Hierbei kann es auch vorgesehen sein, dass die Entropie der von dieser Entropiequelle erzeugten Zufallszahlen mithilfe dafür geeigneter Mittel fortwährend überprüft, die Entropiequelle also validiert wird. Das zuvor angesprochene Pre-shared Secret, welches der Provider einerseits an einem jeweiligen Peering Point hiterlegen muss, kann er andererseits zum Beispiel mit einem Dongle oder einem Speicherstick oder dergleichen im Zusammenhang mit einem Vertragsabschluss dem Teilnehmer zur Verwendung mit dessen IAD aushändigen.

Der Tunnel wird nach einem verschlüsselten Protokoll, zum Beispiel AES 256, unter Verwendung des in der zuvor beschriebenen Weise erzeugten quantensicheren Schlüssels, aufgebaut. Dies geschieht, abgesehen von Art der Erzeugung der jeweils verwendeten Schlüssel, unter Einsatz grundsätzlich bekannter Techniken, wie beispielsweise von SOCKS Proxies auf den jeweiligen, die vorgestellte Lösung nutzenden Gateway Routern und SOCKS Servern an den Peering Points im Netzwerk. Der jeweilige Proxy und der jeweilige Server verschlüsseln den kompletten Verkehr, der über sie geleitet wird, nach dem quantensicheren Protokoll. Auch der Einsatz von PQ VPN Systemen kommt insoweit in Betracht.

Was die Berechnung des zur Absicherung des VPN-Tunnels zwischen dem IAD und dem Peering Point genutzten quantensicheren Schlüssels aus der von der Entropiequelle empfangenen Zufallszahl anbelangt, so kommen hierfür unterschiedliche Möglichkeiten in Betracht, welche in diesem Zusammenhang oberbegrifflich als Key Derivation Function (KDF) bezeichnet werden sollen. Denkbar ist insoweit beispielsweise eine einfache bitweise XOR-Verknüpfung der Zufallszahl hoher Entropie mit dem Pre-shared Secret oder auch die Anwendung eines Verschlüsselungsverfahrens, welches eine auf das Pre-shared Secret angewendete, als Chiffrat den quantensicheren Schlüssel erzeugende Blockchiffre verwendet. Beispielhaft sei insoweit die Anwendung des AES, das heißt des Advanced Encryption Standards, genannt. Im Hinblick auf die einer bitweisen XOR-Verknüpfung anhaftenden Probleme (beispielsweise bei der Verknüpfung zweier identischer Zahlen oder von zwei Bitfolgen, bei denen alle einzelnen Bits einer der Bitfolgen invers zu den einzelnen Bits der anderen Bitfolge sind) und auf die relative Einfachheit dieser Operation, sollte indessen zu weiteren Erhöhung der Sicherheit vorzugsweise eine durch das NIST (National Institute of Standards and Technology) standardisierte KDF verwendet werden.

Mit Blick auf die KDF (Key Derivation Function) sei in diesem Zusammenhang auch noch auf eine denkbare Modifizierung des Verfahrensablaufs hingewiesen, durch welche eine weitere Erhöhung der Sicherheit erreicht werden könnte. Demgemäß ist es denkbar, dass sowohl seitens des IAD als auch des Peering Points ein gewisser Vorrat zur Umsetzung des Verfahrens verwendbarer KDFs implementiert wird. Beide Netzwerkeinrichtungen (IAD, respektive Home Gateway oder Home- oder Office Router, sowie Peering Point) müssten sich dann (jeweils) zunächst darüber verständigen, welche KDF zur Erzeugung der gemeinsamen quantensicheren Schlüssel in Anwendung auf die von der Entropiequelle empfangenen Zufallszahlen angwendet werden soll.

Denkbar ist es dabei, dass sich die Netzwerkeinrichtungen hierüber zum Beispiel mit der erstmaligen Inbetriebnahme und Kontaktaufnahme des IAD zum Peering Point verständigen. Alternativ (sofern eine initial zu verwendende KDF eindeutig festgelegt ist) oder zusätzlich könnte die anzuwendende KDF (gegebenenfalls auch mehrfach), initiiert durch eine der beiden Netzwerkeinrichtungen, gewechselt werden, indem eine Netzwerkeinrichtung an die andere eine Nachricht mit einer Information über die fortan zu verwendende KDF übermittelt. Hierbei könnte außerdem die Art der jeweils verwendeten KDF (zum Beispiel durch eine Nummer) in kodierter Form in den Identifikatoren der mittels der jeweiligen KDF erzeugten Schlüssel angegeben werden. Auch wenn die Ausgestaltung der Art und Weise eines Wechsels der KDF selbstverständlich durch ein entsprechendes Protokoll genauestens geregelt werden kann, könnte durch eine solche Kodierung der verwendeten KDF in einem jeweiligen Identifikator sichergestellt werden, dass beide Netzwerkeinrichtungen stets die richtigen, nämlich auf identische Weise erzeugten und somit auch identischen Schlüssel verwenden und es nicht zu unnötigen Fehlversuchen einer durch Verschlüsselung gesicherten Kommunikation kommt.

Soweit vorstehend von einem zur Sicherung des VPN-Tunnels zwischen dem IAD und dem Peering Point verwendeten quantensicheren Schlüssel gesprochen wurde, beziehen sich die weiteren im Zusammenhang damit gegebenen Erläuterungen auf eine zumindest temporäre Absicherung des zwischen dem IAD und dem Peering Point aufgebauten VPN-Tunnels mittels des betreffenden, in der dargestellten Weise aus einer quantensicheren Zufallszahl der Entropiequelle lokal in dem IAD und in dem Peering Point errechneten Schlüssels. Dies schließt aber andererseits ausdrücklich die Möglichkeit ein, dass dieser zur Sicherung des VPN-Tunnels verwendete Schlüssel vorzugsweise nur eine beschränkte Geltungsdauer hat. Vorzugsweise kann es insoweit vorgesehen sein, dass dieser quantensichere Schlüssel nur für eine festgelegte Zeitdauer oder aber für ein festgelegtes, über den mit seiner Hilfe abgesicherten VPN-Tunnel übertragenes Datenvolumen gültig bleibt. Vor diesem Hintergrund gestaltet sich das Verfahren in der Weise, dass der IAD und der Peering Point
a.) von der Entropiequelle einen, nämlich denselben Entropie-Stream empfangen,
b.) den bei ihnen eingehenden Entropie-Stream in bei ihnen jeweils identisch vorliegende Zufallszahlen gleicher Länge und in bei ihnen ebenfalls identisch vorliegende, eine jeweilige Zufallszahl eineindeutig bezeichnende Identifikatoren vereinzeln,
c.) fortwährend und in identischer Weise aus den durch Vereinzelung aus dem Entropie-Stream erhaltenen Zufallszahlen unter Anwendung des Pre-shared Secret quantensichere Schlüssel errechnen, welche sie für eine spätere Verwendung zur Absicherung des zwischen ihnen aufgebauten VPN-Tunnels gemeinsam mit dem die jeweils verwendete Zufallszahl und damit den aus ihr erzeugten Quantenschlüssel eineindeutig bezeichnenden Identifikator in einem gesicherten Speicher ablegen.

Das heißt, der zur Absicherung des VPN-Tunnels zwischen dem IAD und dem Peering Point verwendete quantensichere Schlüssel wird wiederholt gewechselt, wobei der jeweils zu verwendende neue quantensichere Schlüssel mit Hilfe eines ihn eineindeutig bezeichnenden Identifikators (Key ID) identisch sowohl beim IAD als auch beim Peering Point ausgewählt wird. In einem entsprechenden Protokoll wird demnach festgelegt, welche der vorgenannten Einrichtungen (IAD, Peering Point) einen Schlüsselwechsel jeweils initiiert und dazu den Identifikator, welcher den jeweils aktuell ausgewählten Schlüssel bezeichnet, an die jeweils andere Einrichtung überträgt, damit diese denselben quantensicheren Schlüssel auf den VPN-Tunnel anwenden kann.

Das Verfahren kann weiterhin so ausgebildet sein, dass die von der Entropiequelle übertragene Zufallszahl (im Falle eines dauerhaft gültigen quantensicheren Schlüssels zur Absicherung des VPN-Tunnels) oder der Entropie-Stream seitens der Entropiequelle mit dem privaten Schlüssel eines nach einem PQC-Verfahren, das heißt nach einem Verfahren der Post Quantum Cryptography, erzeugten Schlüsselpaars signiert wird. Durch Anwendung des öffentlichen Schlüssels, welcher demnach in seiner Eigenschaft als öffentlicher Schlüssel auch dem IAD und dem Peering Point zugänglich ist, respektive vorliegt, auf die Signatur können das IAD und der Peering Point die Authentizität der von der Entropiequelle empfangenen Daten überprüfen. Sie können sich hierdurch Gewissheit darüber verschaffen, dass die betreffenden Daten tatsächlich von der dafür vorgesehenen Entropiequelle eingehen und hierdurch implizit gewährleistet ist, dass diese unverändert geblieben sind. Zur Authentifizierung der Entropiequelle kommt alternativ aber auch die Verwendung eines PQC-Zertifikats in Betracht, also eines nach einem Verfahren der Post Quantum Cryptography erzeugten Zertifikats, welches durch die Entropiequelle zusammen mit der Zufallszahl, respektive dem Entropie-Stream, an das IAD und den Peering Point übertragen wird.

Das "vorverteilte Shared Secret" (Pre-shared Secret) und die Post Quantum (PQ) Schlüssel beziehungsweise die PQ-VPN-Konfiguration müssen ein konfigurierbarer Teil des Gateway Routers sein. Die Schlüssel werden über eine Hardwarekomponente (zum Beispiel ein Dongle) in die Router integriert, welche separat an die Betreiber der Gateway Router ausgeliefert wird. Die Dongles werden über mehrere Faktoren, zum Beispiel zusätzliche Passwörter zur Einrichtung und Anmeldung an den zentralen Verteiler der Entropie, gesichert, so dass der richtige Nutzer sichergestellt werden kann (analog den Verfahren zur Einrichtung neuer Internet Banking Software, respektive der Einrichtung eines TAN Verfahrens). Ein Gateway Router (IAD) mit einem Pre-shared Secret kann sich nun mit der zentralen Entropiequelle verbinden und aus daraufhin von der Entropiequelle erhaltenen Zufallszahlen private Schlüssel zur Verschlüsselung der Netzwerkverkehre erzeugen. Die Rate der versendeten Entropie muss dabei nicht sehr hoch sein. Eine AES Verschlüsselung gilt bis zu 64 GByte Datentransfer als quantensicher, daher sollte der Versand von einigen wenigen Zufallszahlen pro Tag für Datenvolumen in Gateway Router für insbesondere den Home- oder Office-Einsatz und für IoT ausreichend sein. Hiervon, nämlich von einer insoweit als eher gering anzusehenden Datenrate an entsprechenden Teilnehmeranschlüssen, unberührt sind selbstverständlich Anforderungen an die Entropie der nach dem Verfahren erzeugten zur Absicherung eines jeweiligen VPN-Kanals eingesetzten Schlüssel. Diese muss in jedem Falle sehr hoch sein, um von einem quantensicheren Schlüssel ausgehen und sprechen zu können.

Der Gateway Router sollte die von der Entropiequelle erhaltenen Zufallszahlen und die daraus erzeugten privaten Schlüssel nicht auf einem Medium speichern. Sie sollten vorzugsweise ausschließlich im Hauptspeicher des Routers vorliegen. Bei einem Neustart sollten alle Zufallszahlen und private Schlüssel verfallen und es sollten neue Zufallszahlen angefordert werden. Der Router sollte nicht mehr als eine kleine Anzahl von privaten Schlüsseln im Hauptspeicher vorhalten. Die privaten Schlüssel sollten rollierend gewechselt werden, wobei der älteste private Schlüssel gelöscht und durch einen neuen privaten Schlüssel ersetzt wird.

Um nun einen Tunnel aufzubauen, wird das folgende Protokoll zwischen einem jeweiligen nach der Erfindung arbeitenden Gateway Router, so zum Beispiel auch einem Software Defined Gateway Router, beim Teilnehmer/Kunden und einem Server im Peering Point eines Netzbetreibers verwendet:
1. Der Gateway Router wählt zufällig einen privaten Schlüssel aus den verfügbaren privaten Schlüsselelementen aus.
2. Der Gateway Router schickt die ID des privaten Schlüssels, das heißt den einen jeweiligen Schlüssel eineindeutig bezeichnenden Identifikator, an den Server des Peering Points.
3. Der Peering Point Server sucht sich basierend auf der ID den passenden privaten Schlüssel heraus.
4. Der Gateway Router startet einen Tunnel-Proxy mit dem privaten Schlüssel.
5. Der Peering Point Server startet einen Tunnel-Server mit dem privaten Schlüssel.
6. Die Verkehre zwischen dem Gateway Router und dem Peering Point werden fortan beispielsweise über AES-256 quantensicher verschlüsselt.

Die Initialisierung des Protokolls seitens des Peering Point Servers ist ebenfalls möglich. In diesem Fall ändert sich das jeweilige Verhalten der zwei Komponenten entsprechend.

Moderne Gateway-, Office -oder Home-Router besitzen die Kapazitäten eine AES Verschlüsselung aller Verkehre leisten zu können. Idealerweise besitzen diese Geräte eine konfigurierbare Hardwareverschlüsselung, um die Arbeit verzögerungsfrei leisten zu können. Somit wird ein quantensicherer Tunnel zwischen dem Anschlusspunkt eines Verbrauchers (Heim, Büro) und dem Server (Peering Point) des Netzwerksproviders aufgebaut und der gesamte Verkehr quantensicher verschlüsselt.

Im Falle einer Router Virtualisierung lässt sich das dargestellte Verfahren auch als virtualisierte, dynamische Komponente im Router realisieren. Die Sicherheitskomponente könnte als Container zur Aufnahme in jeden Gateway-Router beim Kunden/Teilnehmer, so auch in einen Software Defined Gateway Router, nachgeliefert und installiert werden, wodurch eine sehr kostengünstige Realisierung erzielt wird.

Gemäß einer ersten Möglichkeit werden dazu die von der Entropiequelle an das IAD und den Peering Point übertragenen Daten nach dem Public Key Prinzip verschlüsselt, wobei es sich bei dem für die verschlüsselte Übertragung der Daten verwendeten Schlüsselpaar um ein mittels des PQC-Verfahrens erzeugtes Schlüsselpaar handelt. Dabei werden die durch die Entropiequelle mit dem öffentlichen Schlüssel dieses Schlüsselpaares verschlüsselten Daten, nämlich die Zufallszahl oder den Entropie-Stream mit zugehörigen Identifikatoren kodierende Daten, nach ihrem Empfang durch das IAD und durch den Peering Point jeweils mittels des sowohl bei dem IAD als auch bei dem Peering Point vorliegenden privaten Schlüssels des vorgenannten Schlüsselpaares wieder entschlüsselt. Auf die entschlüsselten Daten wird dann das bei dem IAD und beim Peering Point vorliegende gemeinsame Geheimnis (Pre-shared Secret) zur Erzeugung eines oder mehrerer quantensicherer Schlüssel in identischer Weise angewendet.

Eine weitere Möglichkeit besteht darin, die Daten, welche die Zufallszahl oder den Entropie-Stream mit Zufallszahlen und zugehörigen Identifikatoren kodieren, vor ihrer Übertragung an das IAD und an den Peering Point symmetrisch zu verschlüsseln. Die symmetrische Verschlüsselung der Daten erfolgt hierbei mittels eines gemeinsamen, zwischen der Entropiequelle, dem IAD und dem Peering Point unter Anwendung des PQC-Verfahrens nach dem Prinzip der Key Encapsulation ausgetauschten Schlüssels.

Darüber hinaus können selbstverständlich die über den mittels des quantensicheren Schlüssels abgesicherten VPN-Tunnel zwischen dem IAD und einem anderen IAD als Gegenstelle (zum Beispiel IAD an einem anderen Firmenstandort) übertragenen Daten (Nutzdaten) verschlüsselt übertragen werden. Selbstverständlich sollte vorzugsweise hierbei das vorstehend genannte andere IAD, welches an anderer Stelle an das Weitverkehrsnetz angekoppelt ist, ebenfalls über einen mit Hilfe einer Entropiequelle quantengesicherten VPN-Tunnel zu einem Peering Point an das Weitverkehrsnetz angebunden sein. Die Verschlüsselung der zwischen den beiden IADs ausgetauschten Daten erfolgt hierbei symmetrisch mittels eines nur bei den beiden IADs vorliegenden Schlüssels. Somit ist sichergestellt, dass auch der die entsprechende Infrastruktur, wie beispielsweise einen zur Nutzung des erfindungsgemäßen Verfahrens ausgebildeten Peering Point, zur Verfügung stellende Provider auf die zwischen den beiden IADs übertragenen Daten keinerlei Zugriff hat.

Bei der zuletzt angesprochenen Konstellation und Verfahrensweise, gemäß welcher der IAD Daten mit einem anderen IAD als Gegenstelle symmetrisch verschlüsselt austauscht, stellt der dazu von den IADs verwendete, nur ihnen bekannte Schlüssel in Bezug auf diese miteinander kommunizierenden Einheiten ein Shared Secret dar. Sowohl hinsichtlich der konkreten Verwendung dieses Shared Secret bei der Verschlüsselung der Daten als auch hinsichtlich seines Austauschs zwischen den IADs kommen dabei mehrere Möglichkeiten in Betracht.

Entsprechend einer ersten dieser Möglichkeiten könnte das Shared Secret selbst von den IADs zur Verschlüsselung der zwischen der ihnen ausgetauschten Daten verwendet werden. Soweit es sich jedoch im Zusammenhang mit einer solchen Vorgehensweise bei dem Shared Secret um einen unter Einsatz klassischer Verfahren generierten Schlüssel handelt, wären aber jedenfalls die mit seiner Hilfe verschlüsselten Daten selbst (nicht die VPN-Tunnel als gesicherte Verbindung zwischen einem jeweiligen IAD und einem jeweiligen Peering Point) möglicherweise künftig angreifbar. Daher würde man diese Möglichkeit bei einer praktischen Umsetzung (Implementierung) des erfindungsgemäßen Verfahrens eher nicht in Betracht ziehen.

Will man insoweit die Sicherheit der Verschlüsselung der zwischen den IADs übertragenen Daten weiter erhöhen, so besteht eine andere Möglichkeit darin, dass auch beide IADs mit identischen, von einer Entropiequelle generierten Zufallszahlen versorgt werden. Dennoch kommt auch hierbei vorzugsweise das bei den IADs vorliegende gemeinsame Shared Secret zum Einsatz. Sofern nämlich die durch die IADs von der Entropiequelle bezogene Zufallszahl selbst zur symmetrischen Verschlüsselung der zwischen den IADs ausgetauschten Daten verwendet würde, hieße dies, dass zumindest der Zugangsnetzprovider im Bereich eines jeweiligen Peering Points Zugriff auf die zwischen den IADs übertragenen Daten hätte, da aufgrund der nach dem erfindungsgemäßen Verfahren erfolgenden Absicherung des zwischen einem jeweiligen IAD und einem jeweiligen Peering Point aufgebauten VPN-Tunnels die entsprechende Zufallszahl auch bei den Peering Points vorliegt.

Daher ist es bei dieser Verfahrensvariante vorgesehen, dass die IADs die zur Verschlüsselung der zwischen ihnen ausgetauschten Daten verwendete, von der Entropiequelle bezogene Zufallszahl mit dem nur bei ihnen vorliegenden Shared Secret, welches nicht zu verwechseln ist mit dem zur Absicherung des VPN-Tunnels verwendeten Pre-shared Secret von IAD und Peering Point, verrechnet wird. Auch insoweit kommt also eine Key Derivation Function zum Einsatz, gemäß welcher die IADs beispielsweise die zur Verschlüsslung der zwischen ihnen ausgetauschten Daten verwendete Zufallszahl bitweise XOR-verknüpfen mit ihrem gemeinsamen Shared Secret oder dem letztlich zur Verschlüsselung der Daten verwendeten Schlüssel durch Anwendung einer Blockchiffre unter Verwendung der Zufallszahl und des Shared Secret erzeugen.

Der Austausch des Shared Secret zwischen den IADs beziehungsweise dessen Betreibern kann beispielsweise ganz klassisch durch Übergabe des von einem der Betreiber erzeugten Shared Secret an den anderen erfolgen. Hierbei kann das Shared Secret zum Beispiel in Form eines von dem (anderen) Betreiber des IAD mittels eines Smartphones oder dergleichen zu scannenden QR-Codes übergeben werden. Denkbar ist aber auch eine Übergabe in elektronischer Form, zum Beispiel auf einem Speicherstick.

In seiner zuvor beschriebenen Ausbildungsform, gemäß welcher zwei IADs, die beide jeweils über einen mittels quantensicherem Schlüssel gesicherten VPN-Tunnel mi einem zugehörigen Peering Point verbunden sind, untereinander verschlüsselt Daten austauschen, die auch in den Peering Points nicht unverschlüsselt zugänglich sind, stellt das Verfahren im Grunde die Umsetzung eines zweistufigen Sicherheitskonzeptes dar. Erste Stufe: Absicherung der Verbindung auf der jeweiligen letzten Meile durch einen quantensicheren VPN-Tunnel. Zweite Stufe: Symmetrische Verschlüsselung der von IAD zu IAD über die VPN-Tunnel und das öffentliche Weitverkehrsnetz übertragenen Daten.

Darüber hinaus kann es vorgesehenen, dass die beiden symmetrisch verschlüsselte Daten über das Weitverkehrsnetz miteinander austauschenden IADs sich untereinander authentifizieren. Dies kann beispielsweise jeweils zum Beginn einer Session für einen Datenaustausch oder im Zusammenhang mit der Übertragung verschlüsselter Daten, unter Nutzung von PQC-Techniken (PQC-Zertifikate oder Signieren übertragener Daten mit einem PQC-Schlüssel) erfolgen.

Ein die Aufgabe lösendes und zur Durchführung des Verfahrens ausgebildetes System besteht im Wesentlichen aus einem Daten über ein Weitverkehrsnetz mit einer Gegenstelle austauschenden Integrated Access Device IAD, bei welchem es sich um einen teilnehmerseitigen Verbindungsendpunkt handelt, sowie aus einem durch einen Zugangsnetzprovider betriebenen Peering Point, über welchen das IAD und gegebenenfalls an diesem betriebene Kommunikationsendgeräte an ein Zugangsnetz und damit an das Weitverkehrsnetz angebunden sind. Darüber hinaus umfasst das System eine sowohl den Peering Point des Netzbetreibers als auch das IAD beim Teilnehmer/Kunden mit mindestens einer Zufallszahl hoher Entropie, vorzugsweise mit einem Entropie-Stream, versorgende Entropiequelle.

Bei dem IAD handelt es sich beispielsweise um ein Home-Gateway oder um einen Home- oder Office-Router mit Modemfunktion, über welchen typischerweise ein oder mehrere telekommunikative Endgeräte eines Teilnehmers Zugang zu dem Weitverkehrsnetz, wie insbesondere zum Internet, erhalten. Nachfolgend wird das IAD daher synonym auch als Gateway Router oder nur als Router bezeichnet.

Der Peering Point, aber insbesondere auch das IAD (der Gateway Router), sind dazu ausgebildet, eine jeweilige, von der Entropiequelle empfangene, bei ihnen identisch vorliegende Zufallszahl nach einer von ihnen, also sowohl durch das IAD als auch durch den Peering Point, identisch angewendeten Vorschrift zu verarbeiten und im Ergebnis dessen einen Schlüssel zu erzeugen, welchen sie zur Absicherung eines zwischen ihnen aufgebauten VPN-Tunnels verwenden. Neben einer typischerweise in beiden Einrichtungen (Peering Point und IAD) ohnehin vorhandenen Verarbeitungseinrichtung sind diese außerdem mit einer durch ihre Verarbeitungseinrichtung zu verarbeitenden Programmanwendung ausgestattet, bei deren Verarbeitung die Vorschrift zur Überführung der von ihnen empfangenen Zufallszahl hoher Entropie in den zur Absicherung des VPN-Tunnels zu verwendenden Schlüssel ausgeführt wird. Wie bereits zum Verfahren ausgeführt, sind der Peering Point und das IAD außerdem mit einem gemeinsamen Pre-shared Secret ausgestattet, mit welchem die von der Entropiequelle bezogene Zufallszahl entsprechend der durch ihre Verarbeitungseinrichtung verarbeiteten Vorschrift verrechnet wird.

Das vorgenannte IAD, respektive der Gateway Router, dient demnach beim Teilnehmer (Kunden) - analog zu heutigen Routern - als Zugangseinrichtung zu einem Weitverkehrsnetz, wie insbesondere zum Internet, dient aber gemäß der hier vorgestellten Lösung außerdem zur Absicherung des Heim- oder/und Büroanschlusses des Teilnehmers.

Bei der zuvor angesprochenen Gegenstelle des beschriebenen Systems, mit welchem das über den VPN-Tunnel mit dem Peering Point verbundene, dadurch an das Weitverkehrsnetz angekoppelte IAD Daten austauscht, kann es sich um ein weiteres IAD (Gateway Router) handeln. Auch dieses IAD ist hierbei über einen Peering Point an ein Zugangsnetz sowie an das Weitverkehrsnetz angekoppelt, wobei die Verbindung zwischen diesem weiteren IAD und dem Peering Point ebenfalls über einen quantensicher verschlüsselten VPN-Tunnel erfolgt.

In lokalen Netzwerken, seien es Smart Home-, Büro-, Universität- oder Unternehmensstandortsnetzwerke, können die Anwendungen (zum Beispiel Web Browser, Netzwerkdienste, Applikationen) einen SOCKS Proxy auf dem Gateway Router als Proxy-Dienst konfigurieren, um deren Verkehr sicher durch die Providernetze leiten zu können.

Soll nun eine quantensichere Verbindung, im Sinne eines Austausches mittels quantensicherer Schlüssel verschlüsselter Daten, zum Beispiel zwischen zwei Büro-Routern (Gateway Routern, respektive IAD) etabliert werden, so muss in beiden Gateway Routern dasselbe zur Berechnung dieser Schlüssel aus Zufallszahlen einer Entropiequelle dienende, zwischen ihren Betreibern auszutauschende "Secret" als gemeinsames Geheimnis konfiguriert werden. Dieses "Secret" unterscheidet sich von dem "vorverteilten Shared Secret" (zur Unterscheidung hier als Pre-shared Secret bezeichnet) für die Absicherung des VPN-Tunnels zum Peering Point. Der Gateway Router berechnet nun gleichzeitig aus dem Entropie-Stream zwei private Schlüssel: einen privaten Schlüssel, unter Verwendung des Pre-Shared Secret, für die Absicherung des VPN-Tunnels zum Peering Point (Peering Point Server) und einen anderen privaten Schlüssel, unter Verwendung ihres gemeinsamen Geheimnisses (Shared Secret) für die Absicherung der Büro - Büro Kommunikation, also der Datenübertragung zwischen den IADs an den beiden Bürostandorten. Es kommt das folgende Protokoll zur Ausführung:
1. Ein Gateway Router A (Gateway Router an einem der Standorte) wählt zufällig einen privaten Schlüssel aus den verfügbaren privaten Schlüsselelementen aus.
2. Der Gateway Router A schickt die Schlüssel-ID (den eineindeutigen Identifikator) des privaten Schlüssels an den anderen Gateway Router, Gateway Router B am anderen Bürostandort.
3. Gateway Router B wählt auf seiner Seite den privaten Schlüssel passend zur Schlüssel-ID aus.
4. Beide Gateway-Router starten gewissermaßen einen Tunnel, der die Verkehre mit dem privaten Schlüssel quantensicher verschlüsselt, wobei die solchermaßen verschlüsselten Daten auch in den jeweiligen Peering Points nicht offenliegen.

Zur Konfiguration und Nutzung des "Secrets", das heißt des gemeinsamen Geheimnisses müssen die Router eine Konfigurationsmöglichkeit zur Erzeugung sowie für den Import und Export von Zufallszahlen besitzen.

Somit können mittels der vorstehend beschriebenen technischen Lösung zwischen den IADs, also den Teilnehmern/Kunden und den von ihnen jeweils genutzten Peering Points, also den Einrichtungen des jeweiligen Netzbetreibers, quantensicher abgesicherte Verbindungen und darüber hinaus zusätzlich direkt zwischen Teilnehmern/Kunden, durch Verschlüsselung der zwischen ihnen übertragenen und somit auch für den/die Netzbetreiber nicht zugänglichen Daten, aufgebaut und bereitgestellt werden.

Für die vorgestellte technische Lösung lassen sich folgende Sicherheitsbetrachtungen machen. Demnach beruht deren Sicherheit auf:
1. Der Unveränderlichkeit des Entropie-Streams: Der Entropie-Stream muss nicht mehr notwendigerweise geheim sein, sondern es bedarf nur noch der Sicherstellung der Unveränderlichkeit. Diese gelockerte Anforderung liegt an der gemeinsamen Veränderung der mit dem Entropie-Stream gesendeten Zufallszahlen bei den Empfängern, das bei einem jeweiligen IAD und dem zugehörigen Peering Point zur Absicherung des VPN-Tunnels sowie gegebenenfalls bei Daten untereinander quantensicher verschlüsselt austauschenden IADs. Technisch lässt sich die Unveränderlichkeit des Entropie-Streams durch eine PQC-Verschlüsselung / Authentifizierung oder ein PQ VPN sicherstellen. Wird der Entropie-Stream dennoch korrumpiert, dann werden bei den Anwendern keine gleichen Schlüssel-IDs vorliegen, oder es werden verschiedene Schlüssel erzeugt und eine quantensichere Verbindung kann nicht aufgebaut werden. Dadurch ergibt sich eine automatische Sicherung des Verfahrens, wodurch korrumpierte Schlüssel nicht verwendet werden können und gleichzeitig wird die Korrumpierung festgestellt.
2. Dem Geheimnis des vorverteilten Shared Secret: Das vorverteilte Shared Secret, respektive Pre-Shared Secret, sollte ebenfalls eine hohe Entropie besitzen und muss geheim bleiben, da es die Zufallszahlen des Entropie-Streams in geheime (quantensichere) Schlüssel übersetzt. Jeder Router sollte einen eindeutigen, geheimen, vorverteilten Schlüssel besitzen, um die Sicherheit und Eindeutigkeit des Verbindungsendpunktes zu gewährleisten. Hierbei wird für jeden gemäß dem vorgestellten Verfahren zu sichernden VPN-Tunnel ein eigenes Pre-shared Secret benötigt, über welches jeweils nur der jeweilige Router (zum Beispiel Office Gateway Router) und der ihm zugeordnete sowie mit ihm über den gesicherten VPN-Tunnel zu verbindende Peering Point verfügen. Dieses, wie ausgeführt, auch im Peering Point hinterlegte Pre-shared wird zum Beispiel in dem jeweiligen Router durch den diesen Router dem Teilnehmer/seinem Kunden für den Zugang zum Weitverkehrsnetz über den Peering Point zur Verfügung stellenden Netzbetreiber vorprovisioniert.
3. Speicherung der privaten Schlüssel: Die privaten Schlüssel müssen in gesicherten Umgebungen gehalten werden, um sie vor einem Zugriff Dritter zu schützen. Dies kann zum Beispiel auch nicht persistent in einem Hauptspeicher des Gateway Routers oder Software Defined Gateway Routers in einer so genannten "Confidential Computing Umgebung" geschehen.
4. Darüber hinaus beruht die Sicherheit, respektive das Maß an Sicherheit, außerdem auf der für die Erzeugung der Schlüssel aus den Zufallszahlen ausgewählten Key Derivation Function (KDF).

Gemäß der vorgestellten Lösung werden private Schlüssel über öffentliche Netzwerkumgebungen verteilt, ohne die geheimen Schlüssels selbst auszutauschen. Der jeweilige quantensichere Schlüssel, der die Netzwerkverkehre schützt, wird vielmehr lokal in einem jeweiligen Gateway Router (IAD) und in dem von ihm genutzten Peering Point (Peering Point Server) erzeugt, verarbeitet und gespeichert. Das heißt der letztlich verwendete quantensichere Schlüssel wird nicht mehr durch ungesicherte Netze transferiert. Aus diesem Grund sind Technologien, wie Quantenschlüsselaustausch, nicht mehr notwendig, da die für die Datenübertragungen quantensicheren Schlüssel erst lokal beim jeweiligen Anwender erzeugt werden und nicht in öffentlich Netzen vorliegen, respektive nicht über Netze verschickt werden.

Die Qualität der zentral, durch QRNGs/Quantencomputer einer Entropiequelle erzeugten Zufallszahlen, lässt sich vor dem Versand überprüfen und bei Bedarf verbessern.

Das dargestellte Verfahren schützt die Netzwerkverkehre, sofern sichergestellt wird, dass
- der Entropie-Stream von einer authentifizierten Quelle stammt.
- der Entropie-Stream unveränderlich ist.
- die vorverteilten Secrets und die lokal berechneten privaten Schlüssel sicher verwahrt und vor Zugriffen Dritter manipulationssicher gespeichert werden.
- die Verteilung der Secrets manipulationssicher (beispielsweise durch Dongles und mehreren Faktoren) erfolgt.

Da diese Anforderungen bereits heutzutage umsetzbar sind, beschreibt die Erfindung eine disruptive, aber leicht umsetzbare und kostengünstige Lösung zum quantensicheren Schlüsselaustausch für verschiedenste Kundenanbindungen an beliebige Netzprovider (Netzbetreiber), zum Beispiel für Büro- und Heimanschlüsse, IoT, Industrie 4.0, etc.

## Patentansprüche

1. Verfahren zur gesicherten, zwischen einem Integrated Access Device IAD als einem teilnehmerseitigen Verbindungsendpunkt und einer Gegenstelle über ein öffentliches Weitverkehrsnetz erfolgenden Übertragung von Daten, wobei das IAD als Zugangseinrichtung zu dem Weitverkehrsnetz über einen als Peering Point ausgebildeten Netzwerkknoten an ein Zugangsnetz und über dieses an das Weitverkehrsnetz angekoppelt ist, **dadurch gekennzeichnet, dass** zur gesicherten Übertragung der Daten auf der letzten Meile zwischen dem IAD und dem Peering Point ein VPN-Tunnel aufgebaut wird, der mittels eines einen quantensicheren Schlüssel verwendenden Protokolls gesichert wird, wobei der zur Sicherung des VPN-Tunnels verwendete quantensichere Schlüssel als gemeinsamer Schlüssel von IAD und Peering Point gebildet wird, indem eine durch eine Entropiequelle erzeugte und an den Peering Point sowie an das IAD über den Peering Point übertragene Zufallszahl in dem Peering Point und in dem IAD in jeweils identischer Weise mit einem ebenfalls durch eine Zahl repräsentierten Pre-shared Secret, nämlich mit einem vorverteilten und sowohl bei dem IAD als auch bei dem Peering Point hinterlegten gemeinsamen Geheimnis, verrechnet wird.

2. Verfahren nach Anspruch 1, **dadurch gekennzeichnet, dass** der zur Sicherung des VPN-Tunnels zwischen dem IAD und dem Peering Point verwendeten quantensichere Schlüssel nur für eine festgelegte Dauer oder für ein festgelegtes über den VPN-Tunnel übertragenes Datenvolumen gültig bleibt, wobei das IAD und der Peering Point
a.) von der Entropiequelle einen, nämlich denselben Entropie-Stream empfangen,
b.) den bei ihnen eingehenden Entropie-Stream in bei ihnen jeweils identisch vorliegende Zufallszahlen gleicher Länge und in bei ihnen jeweils identisch vorliegende, eine jeweilige Zufallszahl eineindeutig bezeichnende Identifikatoren vereinzeln,
c.) fortwährend und in identischer Weise aus den durch Vereinzelung aus dem Entropie-Stream erhaltenen Zufallszahlen unter Anwendung des Pre-Shared Secret quantensichere Schlüssel errechnen, welche sie für eine spätere Verwendung zur Absicherung des zwischen ihnen aufgebauten VPN-Tunnels gemeinsam mit dem die jeweils verwendete Zufallszahl und damit den jeweiligen Quantenschlüssel eineindeutig bezeichnenden Identifikator in einem gesicherten Speicher ablegen.

3. Verfahren nach Anspruch 1 oder 2, **dadurch gekennzeichnet, dass** die von der Entropiequelle übertragene Zufallszahl oder der Entropie-Stream seitens der Entropiequelle mit dem privaten Schlüssel eines nach einem PQC-Verfahren, das heißt nach einem Verfahren der Post Quantum Cryptography, erzeugten Schlüsselpaares signiert wird, so dass das IAD und der Peering Point die Authentizität der von der Entropiequelle empfangenen Daten und damit deren Herkunft von der Entropiequelle durch Anwendung des öffentlichen Schlüssels des vorgenannten Schlüsselpaares auf die empfangenen, mit dessen privaten Schlüssel signierten Daten überprüfen können.

4. Verfahren nach einem der Ansprüche 1 bis 3, **dadurch gekennzeichnet, dass** durch die Entropiequelle mit der Zufallszahl oder dem Entropie-Stream ein PQC-Zertifikat, nämlich ein nach einem Verfahren der Post Quantum Cryptography erzeugtes Zertifikat übertragen wird, mittels welchem sich die Entropiequelle gegenüber dem IAD und dem Peering Point authentifiziert.

5. Verfahren nach einem der Ansprüche 1 bis 4, **dadurch gekennzeichnet, dass** die von der Entropiequelle an das IAD und den Peering Point übertragenen, eine Zufallszahl oder einen Entropie-Stream aus Zufallszahlen und zugehörigen Identifikatoren kodierenden Daten unter Anwendung eines PQC-Verfahrens verschlüsselt werden.

6. Verfahren nach Anspruch 5, **dadurch gekennzeichnet, dass** die von der Entropiequelle an das IAD und den Peering Point übertragenen Daten nach dem Public Key Prinzip verschlüsselt werden, wobei es sich bei dem für die verschlüsselte Übertragung der Daten verwendeten Schlüsselpaar um ein mittels des PQC-Verfahrens erzeugtes Schlüsselpaar handelt und die durch die Entropiequelle mit dem öffentlichen Schlüssel verschlüsselten, die Zufallszahl oder den Entropie-Stream kodierenden Daten nach ihrem Empfang durch das IAD und durch den Peering Point jeweils mittels des sowohl bei dem IAD als auch bei dem Peering Point vorliegenden privaten Schlüssels dieses Schlüsselpaares entschlüsselt werden.

7. Verfahren nach Anspruch 5, **dadurch gekennzeichnet, dass** die von der Entropiequelle an das IAD und den Peering Point übertragenen Daten symmetrisch verschlüsselt werden mittels eines gemeinsamen, zwischen ihnen unter Anwendung des PQC-Verfahrens nach dem Prinzip der Key Encapsulation ausgetauschten Schlüssels.

8. Verfahren nach einem der Ansprüche 1 bis 7, **dadurch gekennzeichnet, dass** zwischen dem IAD und der Gegenstelle ausgetauschte Daten verschlüsselt über das öffentliche Weitverkehrsnetz übertragen werden.

9. Verfahren nach Anspruch 1 oder 8, **dadurch gekennzeichnet, dass** es sich bei der Daten mit dem IAD austauschenden Gegenstelle um ein weiteres, an anderer Stelle über einen mit Hilfe einer Entropiequelle quantengesicherten VPN-Tunnel zu einem Peering Point an das Weitverkehrsnetz angekoppeltes IAD handelt und dass die zwischen den beiden IADs über ihr jeweiliges Zugangsnetz und das Weitverkehrsnetz übertragenen Daten unter Verwendung eines gemeinsamen, nur bei den beiden IADs vorliegenden quantensicheren Schlüssels symmetrisch verschlüsselt werden.

10. Verfahren nach Anspruch 9, **dadurch gekennzeichnet, dass** die IADs zur symmetrischen Verschlüsselung zwischen ihnen ausgetauschter Daten jeweils einen quantensicheren Schlüssel verwenden, welchen sie aus einer durch beide IADs von einer Entropiequelle empfangenen identischen Zufallszahl durch Verrechnung dieser Zufallszahl mit einem Shared Secret, nämlich mit einem zuvor in beiden IADs hinterlegten gemeinsamen Geheimnis, erzeugen.

11. System zur gesicherten Übertragung von Daten über ein öffentliches Weitverkehrsnetz, mit mindestens einem die Daten über das Weitverkehrsnetz mit einer Gegenstelle austauschenden Integrated Access Device IAD als einem teilnehmerseitigen Verbindungsendpunkt und mit einem als Peering Point ausgebildeten Netzwerkknoten, über welchen das mindestens eine IAD an ein Zugangsnetz und über dieses Zugangsnetz an das Weiterverkehrsnetz angekoppelt ist, wobei eine zwischen dem mit einer Verarbeitungseinrichtung und einer Programmanwendung zur Verarbeitung eines VPN-Clients ausgestatten IAD und dem einen VPN-Server umfassenden Peering Point bestehende Verbindung durch einen VPN-Tunnel gesichert ist, **dadurch gekennzeichnet, dass** das System weiterhin eine Zufallszahlen generierende und aussendende Entropiequelle umfasst und dass das IAD und der Peering Point
- mit einem durch eine Zahl repräsentierten gemeinsamen, das heißt identischen Pre-shared Secret ausgestattet sind,
- dazu ausgebildet sind, aus einer von der Entropiequelle bei ihnen identisch eingehenden Zufallszahl unter Verwendung des Pre-shared Secret nach einer durch sie identisch angewendeten Vorschrift einen quantensicheren Schlüssel zur Absicherung, das heißt zur Verschlüsselung, des zwischen ihnen aufgebauten VPN-Tunnels zu errechnen.

12. System nach Anspruch 12, **dadurch gekennzeichnet, dass** sowohl das IAD als auch der als Peering Point fungierende Netzwerkknoten dazu ausgebildet sind, bei ihnen von der Entropiequelle eingehende, durch die Entropiequelle mittels eines Verfahrens der Post Quantum Cryptography signierte oder zusammen mit einem PQC-Zertifikat übermittele Zufallszahlen auf deren Authentizität, das heißt auf ihre Herkunft von der Entropiequelle zu überprüfen.

13. System nach Anspruch 12 oder 13, **dadurch gekennzeichnet, dass** es sich bei der Gegenstelle, mit welcher das IAD Daten über das Weitverkehrsnetz austauscht, um ein weiteres IAD handelt, welches in gleicher Weise wie das Daten mit ihm austauschende IAD, nämlich über einen mit Hilfe einer Entropiequelle quantengesicherten VPN-Tunnel zu einem Peering Point, an das Weitverkehrsnetz angekoppelt ist.

14. System nach Anspruch 14, **dadurch gekennzeichnet, dass** beide IADs mit einem Shared Secret, nämlich mit einem durch eine Zahl repräsentierten, und nur bei den beiden IADs vorliegenden gemeinsamen Geheimnis, ausgestattet sind.
